# EUROPÄISCHE PATENTSCHRIFT

(11) **EP 3 610 200 B1**
(45) Veröffentlichungstag und Bekanntmachung des Hinweises auf die Patenterteilung: **28.08.2024**
(21) Anmeldenummer: 18717325.7
(22) Anmeldetag: 09.04.2018
(51) Int. Cl.: F24C 15/16, A47B 88/40

(54) **TELESKOPSCHIENE**
TELESCOPIC RAIL
RAIL TÉLESCOPIQUE

(30) Priorität: 12.04.2017 DE 102017107954
(43) Veröffentlichungstag der Anmeldung: 19.02.2020
(73) Patentinhaber: Accuride International GmbH, 65582 Diez (DE)
(72) Erfinder: TREMOLIERES, Laurent, 65550 Limburg-Linter (DE); HEFFEL, Andreas, 56170 Bendorf (DE)
(74) Vertreter: WSL Patentanwälte Partnerschaft mbB
(86) Internationale Anmeldenummer: PCT/EP2018/059012
(87) Internationale Veröffentlichungsnummer: WO 2018/189098

(56) Entgegenhaltungen:
- EP-A1- 2 481 990
- WO-A2-2009/012757
- DE-A1- 102005 028 673
- DE-U1- 202011 051 895
- US-A1- 2013 193 824

## Beschreibung

Die vorliegenden Anmeldung betrifft eine Teleskopschiene mit einem ersten Schienenelement, wenigstens einem weiteren Schienenelement und wenigstens einem Wälzkörperkäfig zum Positionieren einer Mehrzahl von Wälzkörpern zwischen zwei Schienenelementen, wobei der Wälzkörperkäfig mindestens zwei Aufnahmeschenkel mit jeweils einer Mehrzahl von Durchbrechungen aufweist, wobei die Aufnahmeschenkel einen einen Innenraum teilweise einschließenden Querschnitt aufweisen, sowie einer Mehrzahl von in den Durchbrechungen der Aufnahmeschenkel aufgenommenen Wälzkörpern, wobei der Wälzkörperkäfig mit den Wälzkörpern zwischen dem ersten Schienenelement und dem weiteren Schienenelement angeordnet ist. Dabei weist die Teleskopschiene eine erste Gruppe von Wälzkörpern auf, wobei die Wälzkörper der ersten Gruppe aus Graphit hergestellt sind. Zudem weist die Teleskopschiene eine zweite Gruppe von Wälzkörpern auf, wobei die Wälzkörper der zweiten Gruppe aus einem Material hergestellt sind, das eine größere Härte aufweist als das Graphit der Wälzkörper der ersten Gruppe. In den Durchbrechungen mindestens zweier Aufnahmeeschenkel sind jeweils mindestens zwei Wälzkörper der zweiten Gruppe aufgenommen, wobei die Wälzkörper der ersten Gruppe und die Wälzkörper der zweiten Gruppe in mindestens einer Schnittebene einen kreisförmigen Querschnitt mit einem Durchmesser aufweisen, wobei in den Durchbrechungen jedes von mindestens zwei Aufnahmeschenkeln bereits bei der Montage alle Wälzkörper der ersten Gruppe einen kleineren Durchmesser aufweisen als mindestens zwei Wälzkörper der zweiten Gruppe und wobei in Längsrichtung betrachtet in jedem Aufnahmeschenkel jeweils der erste und der letzte Wälzkörper, Wälzkörper der zweiten Gruppe sind.

Die vorliegende Anmeldung betrifft zudem auch ein Haushaltsgerät, mit einer solchen Teleskopschiene.

Teleskopschienen mit einem ersten Schienenelement, wenigstens einem weiteren Schienenelement und mindestens einem Wälzkörperkäfig, insbesondere einem Kugelkäfig, mit darin aufgenommenen Wälzkörpern, insbesondere Kugeln, zwischen dem ersten Schienenelement und dem weiteren Schienenelement sind aus dem Stand der Technik bekannt. Sie werden u.a. in unterschiedlichen Haushaltsgeräten eingesetzt, beispielsweise in Spülmaschinen, Mikrowellen, Backöfen, Dampfgargeräten etc. In diesen Geräten werden solche Teleskopschienen zum Halten und Ausziehen von Einschüben verwendet, bspw. von Gargutträgern, einschließlich Backblechen und Rosten.

Um ein möglichst reibungsarmes Herausziehen und Einschieben der Teleskopschienen aus einem und in ein Haushaltsgerät zu ermöglichen, sind in vielen Ausführungsformen von Teleskopschienen aus dem Stand der Technik zwischen jeweils zwei Schienenelementen Wälzkörper angeordnet, wobei die Wälzkörper bei einer relativen Bewegung der Schienenelemente gegeneinander auf den Oberflächen der Schienenelemente abrollen. Die dabei entstehende Rollreibung ist geringer als eine unmittelbare Gleitreibung zwischen den Schienenelementen ohne Wälzkörper. Um eine gleichmäßige Verteilung der Wälzkörper zwischen zwei gegeneinander bewegbaren Schienenelementen zu gewährleisten werden die Wälzkörper typischerweise in sogenannten Wälzkörperkäfigen geführt. Dabei gewährleistet ein Wälzkörperkäfig einen definierten Abstand der Wälzkörper in Auszugsrichtung voneinander.

Die aus dem Stand der Technik bekannten Teleskopschienen benötigen, um einen gleichmäßigen, geräuscharmen Lauf beim relativen Verschieben der Schienenelemente gegeneinander zu erzielen, eine Schmierung. Eine solche Schmierung wird bspw. durch Fetten des von den Schienenelementen und den Wälzkörpern gebildeten Lagers erzielt. Insbesondere bei der Verwendung in Haushaltsgeräten hat eine derartige fettartige Schmierung jedoch Nachteile. Zum einen sind lebensmitteltaugliche Schmierstoffe typischerweise nicht für den Einsatz bei hohen Temperaturen geeignet. Daher müssen derart geschmierte Teleskopschienen, z.B. vor einer Pyrolyse eines Backofens, aus diesem ausgebaut werden. Darüber hinaus sind die derart geschmierten Schienen aber auch nicht spülmaschinengeeignet, da Spülwasser den Schmierstoff aus dem Lagerbereich auswäscht, sodass die Schmierwirkung zumindest nach einigen wenigen Spülgängen nachlässt.

Daher sind aus dem Stand der Technik Feststoffschmierungen bekannt, bei denen der Schmierstoff durch einen Reibeingriff zwischen einem Wälzkörper und einem mit einem Schmierstoff beladenen porösen Körper in das Lager eingetragen wird. Diese Schmierung lässt nach einer gewissen Anzahl von Betätigungszyklen nach, da der Schmierstoffvorrat in dem porösen Körper verbraucht ist.

Aus der EP 2 481 990 A1 ist eine Auszugsführung für einen Backofen oder für eine Spülmaschine bekannt, wobei die Auszugsführung umfasst eine Führungsschiene, eine Laufschiene und Wälzkörper, die an der Führungsschiene und/oder der Laufschiene abrollen und die in einem Käfig gehalten sind. Um eine Auszugsführung vorzuschlagen, die auch für hohe Temperaturen geeignet ist, umfasst die Auszugsführung einen temperaturfesten Schmierstoff zum Schmieren der Abrollbewegung der Wälzkörper.

Zudem ist aus der DE 10 2005 028 673 A1 eine Teleskopauszugsvorrichtung für ein Hausgerät mit wenigstens zwei Teleskopschienen und mit einem Kugelkäfig zum Lagern von Wälzkörpern bekannt.

Um die Teleskopauszugsvorrichtung mit einem höheren Bedienkomfort und einer verlängerten Lebensdauer auszustatten, ist der Kugelkäfig dazu vorgesehen, unter Umgehung der Wälzkörper als Endanschlag zum Begrenzen der Auszugsbewegung und/oder Einschubbewegung zu wirken.

Die WO 2009/012757 A2 offenbart ein Wälzlager mit einem alternativen Schmierstoffkonzept. Hierzu wird ein Wälzlager beschrieben mit einer ersten Laufbahn, einer zweiten Laufbahn und mindestens einem Schmierkörper, der auf der ersten und/oder der zweiten Laufbahn abrollt, wobei der Schmierkörper (6) zumindest in seinem Randbereich aus einem graphitreichen Material und/oder aus Graphit gebildet ist.

Die DE 20 2011 051 895 U1 offenbart zudem einen Kugelkäfig für Teleskopauszüge mit in einer Längsrichtung gegeneinander verfahrbaren Schienenelementen, wobei der Kugelkäfig einen Basisabschnitt, der sich in der Längsrichtung erstreckt, und seitlich des Basisabschnitts angeordnete Seitenschenkel aufweist, die sich ebenfalls in der Längsrichtung erstrecken, wobei in den Seitenschenkeln Durchbrechungen für die Aufnahme von Kugeln vorgesehen sind, dadurch gekennzeichnet, dass die Seitenschenkel Durchbrechungen umfassen, für die Aufnahme von jeweils wenigstens einer Kugel und wenigstens einem Schmierelement.

Demgegenüber ist es eine Aufgabe der vorliegenden Erfindung eine Teleskopschiene bereitzustellen, welche eine dauerhafte Schmierung bereitstellt. Zudem ist es eine Aufgabe der vorliegenden Erfindung eine Teleskopschiene bereitzustellen, deren Schmierung auch für einen Einsatz unter hohen Temperaturen, beispielsweise in einem Backofen oder in einem Mikrowellenofen, geeignet ist. Weiterhin ist es eine Aufgabe der Erfindung, eine Teleskopschiene bereitzustellen, die zur Verwendung bei tiefen Temperaturen geeignet ist. Eine weitere Aufgabe der vorliegenden Erfindung ist es, eine Teleskopschiene bereitzustellen, welche spülmaschinengeeignet ist und trotzdem die notwendige Schmierung bereitstellt.

Zumindest eine der zuvor genannten Aufgaben wird durch eine Teleskopschiene gemäß Anspruch 1 gelöst.

Überraschenderweise hat sich herausgestellt, dass es möglich ist, Wälzkörper aus Graphit herzustellen, die ganz ähnlich wie Wälzkörper aus harten Materialien wie Stahl vom Wälzkörperkäfig geführt zwischen zwei Schienenelementen ablaufen und dabei einen gewissen Materialabtrag erfahren, welcher als Graphitschmierung den Lauf der härteren Wälzkörper zwischen den Schienenelementen schmiert.

Die derart bewirkte Schmierung erweist sich als sehr dauerhaft, da die Wälzkörper vollständig aus Graphit gefertigt sind und der Abtrag des Graphitmaterials nur in vergleichsweise geringen Mengen erfolgt. Zudem erweist sich Graphit als temperaturbeständig auch in Temperaturbereichen über 300°C, bei denen fettartige Schmierstoffe, insbesondere für Haushaltsgeräte zur Verarbeitung von Lebensmitteln, nicht mehr geeignet sind. Auch bei tiefen Temperaturen, d.h. bei Temperaturen, bei welchen Fett oder Öl enthaltende Schmierstoffe eine deutlich verringerte Viskosität aufweisen oder gar gefrieren, behält Graphit seine schmierende Wirkung im Wesentlichen bei. Ferner erweist sich Graphit als weitgehend emissionsfrei auch bei höheren Temperaturen, sodass es sowohl für Lebensmittel verarbeitende oder zubereitende Gräte als auch für Vakuumanwendungen geeignet ist.

Graphit ist darüber hinaus resistent gegenüber üblichen, insbesondere haushaltsüblichen, Reinigungsmitteln, auch solchen, wie sie in Spülmaschinen verwendet werden. Daher lässt die Schmierfunktion der Wälzkörper aus Graphit auch nach einem Spülen, insbesondere aber auch nach einem Spülen in einer Spülmaschine, nicht nach. Zwar bewirkt ein Spülen, dass ein Teil des Graphits, welcher auf die Schienenelemente bzw. die härteren Wälzkörper übertragen wurde, abgewaschen wird. Aber bereits nach einem erstmaligen Verschieben der Schienenelemente relativ zueinander ist der Abtrag von den Wälzkörpern aus Graphit ausreichend, um erneut eine gute Schmierung der Teleskopschiene bereitzustellen.

Wenn im Sinne der vorliegenden Anmeldung von einer Teleskopschiene die Rede ist, so ist dieser Begriff derart allgemein zu verstehen, dass nicht nur Schienen davon umfasst sind, bei welchen das erste Schienenelement und wenigstens ein weiteres Schienenelement in etwa die gleiche Länge aufweisen, sondern auch Linearführungen, bei denen ein weiteres Schienenelement deutlich kürzer ist als das erste Schienenelement.

Unter einem Wälzkörper im Sinne der vorliegenden Anmeldung wird ein Rotationskörper verstanden, der als Element einer Führung die Reibung zwischen den verschiedenen Schienenelementen erheblich reduziert und damit eine relative Bewegung zweier Schienen zueinander erleichtert. Wälzkörper sind bspw. Kugeln, Rollen, Tonnen, Nadeln oder Kegel.

In einer Ausführungsform der vorliegenden Erfindung sind sowohl die Wälzkörper der ersten Gruppe als auch die Wälzkörper der zweiten Gruppe Kugeln. Es versteht sich, dass in diesem Fall der Wälzkörperkäfig ein Kugelkäfig ist.

Die Wälzkörper sind an dem Wälzkörperkäfig in den Durchbrechungen der Aufnahmeschenkel aufgenommen.

Der Wälzkörperkäfig umfasst mindestens zwei Aufnahmeschenkel mit Durchbrechungen für die Wälzkörper. Insbesondere kann der Wälzkörperkäfig in Ausführungsformen davon genau zwei, genau drei oder genau vier Aufnahmeschenkel mit Durchbrechungen für die Wälzkörper aufweisen.

In einer Ausführungsform weist der Wälzkörperkäfig wenigstens einen zwei Aufnahmeschenkel verbindenden Verbindungsabschnitt auf. Dieser bestimmt in einer Ausführungsform im Wesentlichen die Breite des Wälzkörperkäfigs. In einer Ausführungsform ist zwischen jeweils zwei Aufnahmeschenkeln des Wälzkörperkäfigs ein Verbindungsabschnitt vorgesehen.

In einer Ausführungsform erstrecken sich von einem Verbindungsabschnitt sich im Wesentlichen senkrecht dazu und parallel zueinander genau zwei Aufnahmeschenkel mit den Durchbrechungen zum Aufnehmen der Wälzkörper. Die Aufnahmeschenkel und der Verbindungabschnitt zusammen bilden in dieser Ausführungsform ein im Wesentlichen C-förmiges Profil.

In einer Ausführungsform der Erfindung ist der Wälzkörperkäfig aus einem Material gefertigt, das ausgewählt ist aus einer Gruppe bestehend aus aluminiertem Stahlblech, Edelstahl oder Kunststoff.

Entscheidend ist für die vorliegende Erfindung zunächst, dass die Wälzkörper der zweiten Gruppe aus einem Material hergestellt sind, das eine größere Härte, insbesondere eine größere Shore-Härte, aufweist als das Graphit der Wälzkörper der ersten Gruppe. Daher sind die Wälzkörper der zweiten Gruppe insbesondere aus Stahl oder Kunststoff hergestellt.

Graphit ist als Werkstoff eher brüchig und kann Druckbelastungen nur bis zu einem gewissen Grad standhalten. Daher sind erfindungsgemäß in den Durchbrechungen eines jeden Aufnahmeschenkels mindestens zwei Wälzkörper der zweiten Gruppe von Wälzkörpern aufgenommen. Diese dienen zum Abtragen der Lasten von dem ersten Schienenelement auf das weitere Schienenelement, während die Wälzkörper der ersten Gruppe im Wesentlichen nur eine Schmierfunktion übernehmen.

Die Wälzkörper der ersten Gruppe und die Wälzkörper der zweiten Gruppe weisen in mindestens einer Schnittebene einen kreisförmigen Querschnitt mit einem Durchmesser auf, wobei in den Durchbrechungen jedes von mindestens zwei Aufnahmeschenkeln des Wälzkörperkäfigs alle Wälzkörper der ersten Gruppe einen kleineren Durchmesser aufweisen als mindestens zwei Wälzkörper der zweiten Gruppe. Auf diese Weise ist es möglich, die Wälzkörper aus Graphit der ersten Gruppe während dem relativen Verschieben der Schienenelemente gegeneinander im Wesentlichen lastfrei zu halten.

Erfindungsgemäß weisen die Wälzkörper der ersten Gruppe, die an einem Aufnahmeschenkel aufgenommen sind, einen kleineren Durchmesser auf als zwei Wälzkörper der zweiten Gruppe an dem gleichen Aufnahmeschenkel.

Die Verwendung von aus Graphit hergestellten Wälzkörpern in einer Teleskopschiene erfordert eine sorgsame Auswahl des Materials, aus dem diese Wälzkörper gefertigt sind. Daher weist in einer Ausführungsform der Erfindung der Graphit der ersten Gruppe von Wälzkörpern eine Härte von 50 Shore oder mehr, vorzugsweise von 60 Shore oder mehr auf.

Erfindungsgemäß bestehen die Wälzkörper der ersten Gruppe aus Graphit.

In einer Ausführungsform weist das Graphit der ersten Gruppe von Wälzkörpern eine Druckfestigkeit von 90 MPa oder mehr, vorzugsweise von 100 MPa oder mehr auf.

In einer Ausführungsform der Erfindung handelt es sich bei dem Graphit der Wälzkörper der ersten Gruppe um synthetisch hergestellten Feinkorngraphit. In einer Ausführungsform ist dieser synthetische Feinkorngraphit frei von Bindemitteln. Insbesondere enthalten die Wälzkörper der ersten Gruppe in einer Ausführungsform der Erfindung mehr als 95% Graphit. In einer weiteren Ausführungsform der Erfindung weisen die Wälzkörper der ersten Gruppe 99 % oder mehr, vorzugsweise 99,9 % oder mehr, an Graphit auf mit einem Rest an unvermeidbaren Verunreinigungen, wie z.B. Asche.

In einer Ausführungsform ist der Graphit isostatisch gepresster Feinkorngraphit.

In einer Ausführungsform wird zur Herstellung der Wälzkörper der ersten Gruppe Graphit als Rohstoff gemahlen und in Mischaggregaten mit kohlenstoffhaltigen Bindemitteln wie z.B. Pechen gemischt. Daran schließt sich die Formgebung der Wälzkörper an. Hierfür stehen unterschiedliche Verfahren zur Verfügung: isostatisches Pressen, Strangpressen, Vibrationsverdichten oder Gesenkpressen. Die gepressten "grünen" Formkörper der Wälzkörper werden im Anschluss unter Sauerstoffausschluss gebrannt und graphitiert. Danach erfolgt ggf. noch eine die mechanische Bearbeitung der graphitierten Formkörper, um das Nominalmaß der Wälzkörper der ersten Gruppe zu erhalten.

In einer Ausführungsform der Erfindung sind die Wälzkörper der ersten Gruppe in anderen Durchbrechungen der Aufnahmeschenkel angeordnet als die Wälzkörper der zweiten Gruppe. Erstaunlicherweise stellt die Trennung der Wälzkörper der beiden Gruppen eine effektivere Schmierung bereit als die Anordnung in den gleichen Durchbrechungen, obwohl bei der letzteren Anordnung die Wälzkörper miteinander in Eingriff sind.

Dabei ist erfindungsgemäß jeder Wälzkörper der ersten Gruppe jeweils durch einen Abschnitt eines Aufnahmeschenkels des Wälzkörperkäfigs von den Wälzkörpern der zweiten Gruppe getrennt.

In einer Ausführungsform der Erfindung sind in jedem Aufnahmeschenkel in Längsrichtung abwechselnd Wälzkörper der ersten Gruppe und Wälzkörper der zweiten Gruppe angeordnet. Auf diese Weise wird eine sehr wirksame Schmierung bereitgestellt, wobei die Teleskopschiene gleichzeitig einen hohen Lastabtrag ermöglicht.

Erfindungsgemäß sind in Längsrichtung betrachtet in jedem Aufnahmeschenkel jeweils der erste und der letzte Wälzkörper Wälzkörper der zweiten Gruppe.

In einer weiteren Ausführungsform ist die Anzahl der Wälzkörper der zweiten Gruppe in jedem der Aufnahmeschenkel mindestens doppelt so groß wie die Anzahl der Wälzkörper der ersten Gruppe.

In noch einer weiteren Ausführungsform der Erfindung weisen alle Durchbrechungen in den Aufnahmeschenkeln unabhängig davon, ob sie einen Wälzkörper der ersten Gruppe oder einen Wälzkörper der zweiten Gruppe aufnehmen, die gleiche geometrische Form auf. In einer Ausführungsform der Erfindung sind dabei alle Durchbrechungen in den Aufnahmeschenkeln flächengleich. Ein derartiger Wälzkörperkäfig ist sehr kostengünstig herstellbar.

In einer Ausführungsform weist mindestens eine der Durchbrechungen eines jeden Aufnahmeschenkels in mindestens einer zu den Aufnahmeschenkeln und zu dem Verbindungsabschnitt senkrechten Schnittebene einen sich in Richtung des Innenraums verjüngenden Querschnitt auf.

Eine derartige Geometrie der Durchbrechungen löst bei passender Wahl der Kugeln die sich stellende Aufgabe. Die Wälzkörper werden von den Durchbrechungen selbst an einem Hineinfallen in den von dem C-förmigen Profil definierten Innenraum gehindert.

Wenn im Sinne der vorliegenden Erfindung der Querschnitt der Aufnahmeschenkel und des Verbindungsabschnitts zusammen als C-förmig bezeichnet wird, so wird damit die Grundform des Wälzkörperkäfigs beschrieben.

Die zu den Aufnahmeschenkeln und zu dem Verbindungsabschnitt senkrechte Schnittebene kann alternativ auch als Schnittebene senkrecht zur Längserstreckung des Kugelkäfigs oder als Schnittebene senkrecht zur Auszugsrichtung einer Teleskopschiene mit dem erfindungsgemäßen Wälzkörperkäfig beschrieben werden.

Der so ausgestaltete Wälzkörperkäfig weist aber nicht nur den Vorteil auf, dass die Wälzkörper beim Montieren nicht in den von dem C-förmigen Wälzkörperkäfig gebildeten Innenraum fallen können, sondern die Geometrie der Durchbrechungen verhindert auch ein Anschlagen des Wälzkörperkäfigs an die Schienenelemente in montiertem Zustand. Der Wälzkörperkäfig kommt vielmehr ausschließlich mit den Wälzkörpern und nicht mit den Schienen in Eingriff. Dies reduziert ein sonst als Störgeräusch wahrnehmbares Rasseln, welches durch das Anschlagen des Wälzkörperkäfigs an die Schienen hervorgerufen wird. Dieses Rasseln macht sich nicht nur akustisch, sondern auch als Vibration bei der Handhabung der Schienen bemerkbar.

Dabei ist es zunächst unerheblich, an welcher Position einer Durchbrechung in Längsrichtung des Wälzkörperkäfigs (diese fällt mit der Auszugsrichtung der zusammengebauten Teleskopschiene zusammen) der sich verjüngende Querschnitt vorgesehen ist.

Denkbar sind Ausführungsformen, bei denen eine Durchbrechung in jeder zu den Aufnahmeschenkeln und zu dem Verbindungsabschnitt senkrechten Schnittebene einen sich in Richtung des Innenraums verjüngenden Querschnitt aufweist. Als Beispiel dafür kann eine kreisförmige konische Durchbrechung genannten werden. Es verstehe sich, dass sich in einer solchen Ausführungsform der minimale Abstand des sich verjüngenden Querschnitts in Längsrichtung des Wälzkörperkäfigs über die Durchbrechung hinweg ändert.

In einer alternativen Ausführungsform, in der die Durchbrechung im Wesentlichen quadratisch ist, kann das sich verjüngende Querschnittsprofil in allen Schnittebenen senkrecht zu den Aufnahmeschenkeln und senkrecht zu dem Verbindungsabschnitt konstant sein.

In einer Ausführungsform der Erfindung sind die gegenüberliegenden Seitenflächen der Durchbrechung in einer zu den Aufnahmeschenkeln und zu dem Verbindungsabschnitt senkrechten Schnittebene gerade. Eine solche Geometrie lässt sich mit geringem Aufwand herstellen.

Dabei werden im Sinne der vorliegenden Erfindung diejenigen Flächen der Durchbrechung als deren Seitenflächen bezeichnet, die nach dem Herstellen des Durchbruchs die Oberseite und die Unterseite des Materialabschnitts miteinander verbinden. Bei einer zylindrischen Durchbrechung in Form einer Ausstanzung oder Bohrung beispielsweise ist die Seitenfläche der Durchbrechung die zylindrische Mantelfläche des Lochs.

Eine Möglichkeit ist es, die Durchbrechungen mit in Richtung des Innenraums aufeinander zulaufenden Seitenflächen in einem für sich betrachtet ebenen Abschnitt eines Aufnahmeschenkels auszuführen. Dies kann bspw. mit spanenden Verfahren geschehen.

Bei einer alternativen Ausführungsform der Erfindung weisen die Durchbrechungen in mindestens einer zu den Aufnahmeschenkeln und zu dem Verbindungsabschnitt senkrechten Schnittebene gerade, einander gegenüberliegende Seitenflächen auf, wobei jeder der Aufnahmeschenkel um eine zu der Schnittebene senkrechte Achse gegeneinander abgewinkelte Abschnitte aufweist, wobei die Achse die Durchbrechungen schneidet, sodass die Seitenflächen einen sich in Richtung des Innenraums verringernden Abstand voneinander aufweisen.

In einer derartigen Ausführungsform ergibt sich der in Richtung des Innenraums verjüngender Querschnitt der Durchbrechungen durch ein Abkanten der Aufnahmeschenkel um eine sich in Längsrichtung, d.h. in einer Richtung senkrecht zu der Schnittebene, erstreckende Achse.

Dies weist fertigungstechnisch einen erheblichen Vorteil auf, da die Durchbrechungen zunächst in einen ebenen Materialabschnitt mit zueinander parallelen Seitenflächen oder einer zylindrischen Seitenfläche eingebracht werden können, wobei die sich verjüngende Geometrie erst nachfolgend durch ein Abkanten der Aufnahmeschenkel hergestellt wird.

Zumindest eine der oben genannten Aufgaben wird auch durch ein Haushaltsgerät zur Lebensmittelverarbeitung, insbesondere einen Backofen, einen Dampfgarer und einen Kombidämpfer, mit einer Teleskopschiene, so wie sie in Ausführungsformen der vorliegenden Erfindung zuvor beschrieben wurde, gelöst.

Dies gilt insbesondere für Haushaltsgeräte, welche eine Selbstreinigung mit Pyrolyse ermöglichen.

Darüber hinaus wird zumindest eine der oben genannten Aufgaben auch durch eine Spülmaschine mit einer Teleskopschiene in einer Ausführungsform der vorliegenden Erfindung, so wie sie zuvor beschrieben wurden, gelöst.

Ferner wird zumindest eine der oben genannten Aufgaben auch durch eine Klimakammer mit einer Teleskopschiene in einer Ausführungsform der vorliegenden Erfindung, so wie sie zuvor beschrieben wurden, gelöst.

Weitere Vorteile, Merkmale und Anwendungsmöglichkeiten der vorliegenden Erfindung werden anhand der folgenden Beschreibung von Ausführungsformen und der dazugehörigen Figuren deutlich.
- Figur 1: ist eine perspektivische Darstellung von schräg oben eines Kugelkäfigs mit darin aufgenommenen Kugeln für eine Teleskopschiene gemäß einem nicht erfindungsgemäßen Beispiel.
- Figur 2: ist eine weggebrochene schematische Seitenansicht einer nicht erfindungsgemäßen Teleskopschiene mit dem Kugelkäfig aus Figur 1.
- Figur 3: ist eine schematische Draufsicht auf eine Ausführungsform eines Kugelkäfigs mit darin aufgenommenen Kugeln für eine erfindungsgemäße Teleskopschiene.

In den Figuren sind gleiche Elemente mit gleichen Bezugszeichen bezeichnet.

Die Grundfunktion der in den Figuren gezeigten Teleskopschienen bzw. Wälzkörperkäfigen für eine solche Teleskopschiene ist es, dass in den Wälzkörperkäfigen sowohl Wälzkörper 7 aus Stahl als auch Wälzkörper 7' aus Graphit aufgenommen sind. Dabei gehören die Wälzkörper 7 aus Stahl, hier Lagerkugeln, zu der im Sinne der vorliegenden Anmeldung zweiten Gruppe von Wälzkörpern. Die Wälzkörper 7`, hier Kugeln, aus Graphit gehören zu der im Sinne der vorliegenden Anmeldung ersten Gruppe von Wälzkörpern. Während die Kugeln 7 aus Stahl dem Lastabtrag dienen, bewirken die Kugeln 7' aus Graphit eine Schmierung des von den Schienenelementen 8, 9 und den Kugeln 7, 7' gebildeten Lagers. Dazu weisen alle Kugeln 7' aus Graphit einen gleichen Durchmesser auf und alle Kugeln 7 aus Stahl weisen einen gleichen Durchmesser auf, wobei der Durchmesser der Stahlkugeln 7 größer ist als der Durchmesser der Kugeln 7' aus Graphit.

In allen dargestellten Ausführungsformen sind die Kugeln aus Graphit aus isostatisch gepresstem Feinkorngraphit hergestellt. Dieses Material ist lebensmitteltauglich und auch bei Temperaturen über 300° C formstabil.

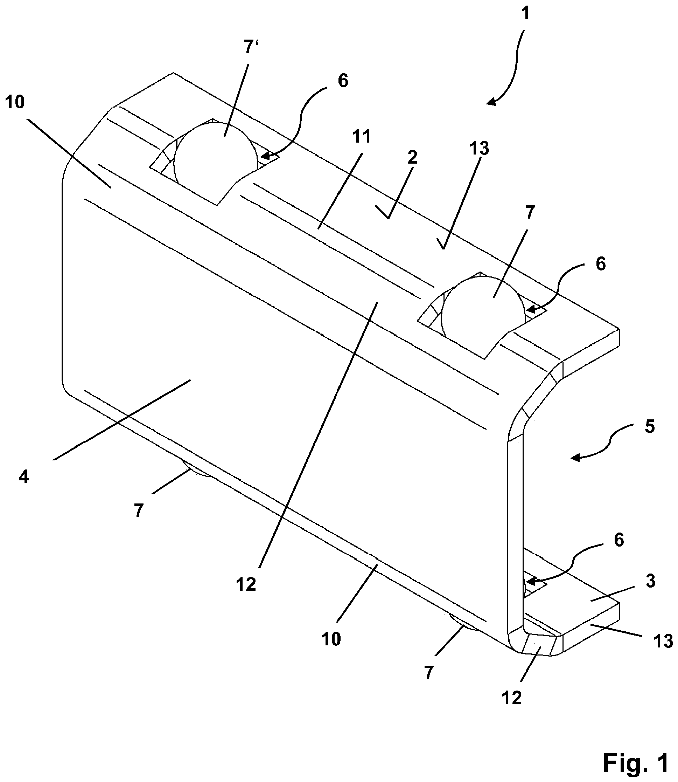

Figur 1 zeigt ein Beispiel eines Wälzkörperkäfigs, hier eines Kugelkäfigs 1, für eine Teleskopschiene, welche die oben genannte Funktion erfüllt. Der Kugelkäfig 1 weist zwei Aufnahmeschenkel 2, 3 und einen Verbindungsabschnitt 4 auf. Dabei erstreckt sich der Verbindungsabschnitt 4 zwischen den beiden, zu dem Verbindungsabschnitt 4 im Wesentlichen senkrechten Aufnahmeschenkeln 2, 3 und verbindet diese. Die Aufnahmeschenkel 2, 3 und der Verbindungsabschnitt 4 zusammen bilden einen im Wesentlichen C-förmigen Querschnitt. Dieser C-förmige Querschnitt ist insbesondere in der Figur 1 gut zu erkennen. Mit diesem Querschnitt schließen die Aufnahmeschenkel 2, 3 und der Verbindungsabschnitt 4 einen Innenraum 5 teilweise ein bzw. umgreifen diesen teilweise.

Wie aus Figur 1 zumindest für den ersten Aufnahmeschenkel 2 gut ersichtlich ist, weist jeder Aufnahmeschenkel 2, 3 eine Mehrzahl von Durchbrechungen 6 auf. Wie dargestellt hat jeder der Aufnahmeschenkel 2, 3 zwei identische Durchbrechungen 6.

In dem gezeigten Beispiel des Kugelkäfigs sind die Durchbrechungen 6 im Wesentlichen quadratisch und werden vollständig von dem Material der Aufnahmeschenkel 2, 3 umschlossen. Es handelt sich anders ausgedrückt um Durchgangslöcher mit quadratischem Querschnitt in den Aufnahmeschenkeln 2, 3. In den Durchbrechungen 6 sind die Kugeln 7, 7' aufgenommen. Dabei ist die Kugel 7 eine Stahlkugel und die Kugel 7` eine Graphitkugel.

Der Abstand der beiden Durchbrechungen 6 in einem jeden der Aufnahmeschenkel 2, 3 definiert den Kugelabstand im verbauten Zustand des Kugelkäfigs.

Der Kugelkäfig 1 ist aus einem aluminierten Stahlblech hergestellt.

Dazu wird zunächst aus einer Blechtafel oder einem Bandstahl das Material für den Kugelkäfig ausgestanzt und anschließend werden die erforderlichen Durchbrechungen ebenfalls durch Ausstanzen in das Blechmaterial eingebracht. In dem dadurch entstandenen ebenen Blechabschnitt haben sämtliche Durchbrechungen, insbesondere die Durchbrechungen zum Aufnehmen der Stahlkugeln und der Graphitkugeln zur Oberfläche des Blechmaterials senkrechte und gerade Seitenflächen. In der dargestellten Ausführungsform hat das Blechmaterial des Kugelkäfigs eine Dicke von 1 mm. Das Stahlblech des Kugelkäfigs weist über seine gesamte Erstreckung eine im Wesentlichen konstante Materialdicke bzw. -stärke auf.

Für die quadratischen Durchbrechungen des Kugelkäfigs aus Figuren 1 bedeutet dies, dass jeweils zwei gegenüberliegende Seitenflächen zueinander parallel sind und aneinander anstoßende Seitenflächen einen rechten Winkel miteinander einschließen. Legt man eine Kugel in eine derartige Durchbrechung ein, so sitzt sie in Abhängigkeit einer Differenz zwischen ihrem Durchmesser und den Seitenlängen des Quadrats entweder oben auf dem Blech auf oder fällt durch dieses hindurch.

Die C-förmige Grundform entsteht nun durch Abkanten der Aufnahmeschenkel 2, 3 gegenüber dem Verbindungsabschnitt 4 um eine Biegelinie 10 parallel zur Längserstreckung des Kugelkäfigs 1. Sodann wird jeder der Aufnahmeschenkel 2, 3 nochmal gekantet. Diesmal um eine Biegelinie bzw. Achse 11 parallel zur ersten Biegelinie 10. Diese Achse 11 schneidet die Durchbrechungen 6 und führt dazu, dass jeder Aufnahmeschenkel sich nun aus zwei gegeneinander abgewinkelten Abschnitten 12, 13 zusammensetzt.

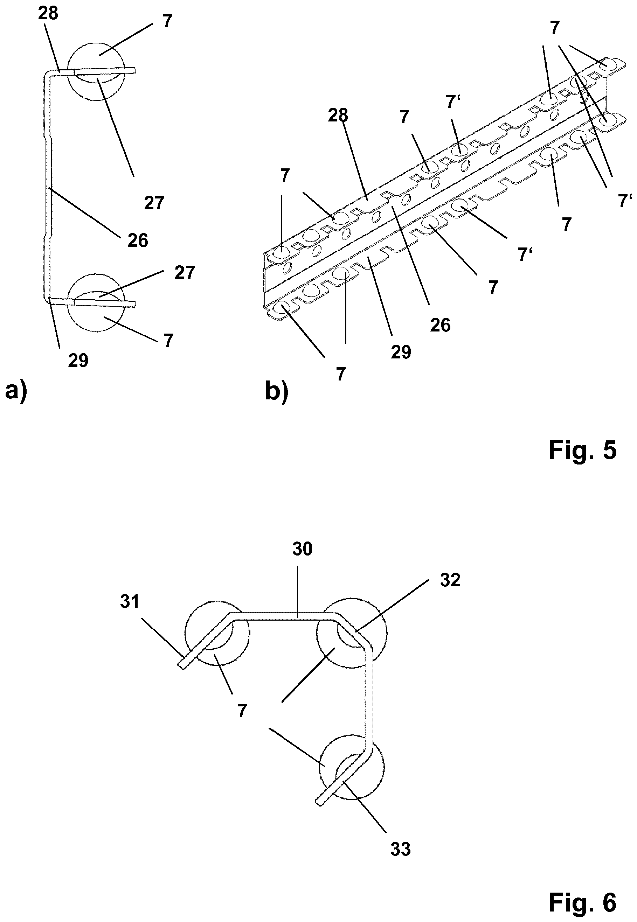

Nach dem Abkanten schließen die Seitenflächen einen Winkel miteinander ein, sodass sich der Querschnitt der Durchbrechung 6 in der Schnittebene in Richtung des Innenraums 5 verjüngt. Ist der kleinste Abstand zwischen den beiden Seitenflächen gemessen parallel zur Schnittebene kleiner als der Durchmesser der Kugel 7, 7', so wird diese von den Seitenflächen wie in Figur 5 dargestellt an einem Hindurchfallen in Richtung des Innenraums 5 gehindert. Mit anderen Worten ausgedrückt verlaufen die Seitenwände konisch zueinander.

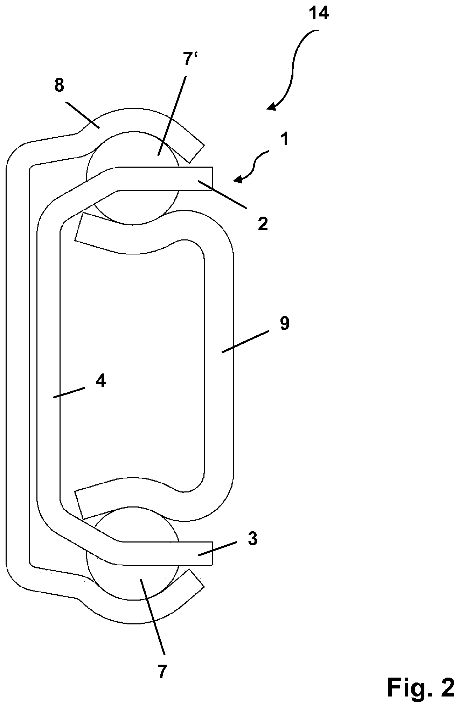

Figur 2 zeigt den Kugelkäfig 1 im eingebauten Zustand, d.h. sich zwischen zwei Schienenelementen 8, 9 einer Teleskopschiene 14 erstreckend. Die Anordnung des Kugelkäfigs 1 zwischen der Außenschiene 8 und der Innenschiene 9 der Teleskopschiene 14 lässt sich der schematischen Seitenansicht der Schiene 14 aus Figur 2 erkennen.

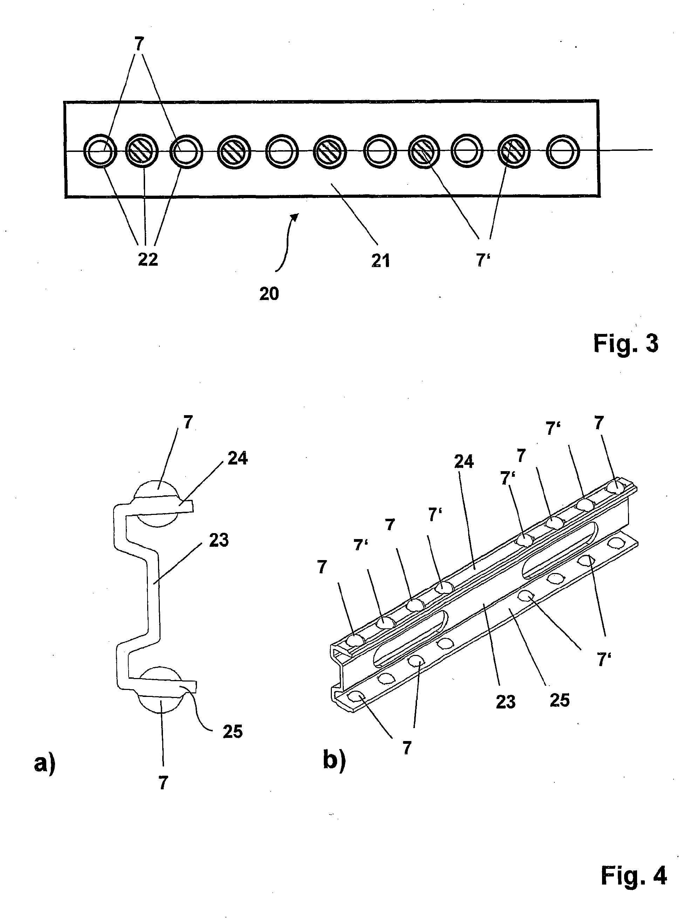

Figur 3 zeigt eine Draufsicht von oben auf eine Ausführungsform eines Kugelkäfigs 20 mit darin aufgenommenen Lagerkugeln. In der dargestellten Ausführungsform weist der Kugelkäfig 20 in beiden Aufnahmeschenkeln, von diesen ist in Figur 3 nur der erste Aufnahmeschenkel 21 dargestellt, kreisförmige Durchbrechungen 22 auf, in welche die Kugeln eingelegt sind. Aus der Draufsicht aus Figur 3 wird deutlich, dass in den Durchbrechungen 22 abwechselnd Kugeln 7 aus Stahl und Kugeln 7' aus Graphit angeordnet sind. Dabei ist es entscheidend, dass in dieser Ausführungsform die in Längsrichtung erste Kugel 7 und die in Längsrichtung letzte Kugel 7 Stahlkugeln sind.

Die Figuren 4 bis 7 zeigen alternative Konfigurationen von Kugelkäfigen für erfindungsgemäße Teleskopschienen. Die zahlreichen Varianten zeigen, dass die konkrete Form beziehungsweise das Profil des Kugelkäfigs und der Schienenelemente für die Prinzipien der vorliegenden Erfindung unerheblich sind und es lediglich darauf ankommt, dass in den Aufnahmeschenkeln der Kugelkäfige sowohl Kugeln aus Stahl als auch Kugeln aus Graphit aufgenommen sind.

Figur 4a) zeigt einen Kugelkäfig 23, der ebenfalls als im Wesentlichen C-förmig zu beschreiben ist.

Dieser weist wie zuvor zwei Aufnahmeschenkel 24, 25 jedoch mit kalottenförmig ausgestalteten Durchbrechungen für die Kugel 7 aus Stahl und die Kugeln 7' aus Graphit auf. Zum besseren Verständnis zeigt Figur 4b) eine perspektivische Ansicht von schräg oben auf den Kugelkäfig 23 aus Figur 4a).

Bei dem Kugelkäfig 26 aus Figuren 5a) und b) handelt es sich um eine einfache Ausführungsform aus gebogenem Stahlblech, bei welcher die Kalotten 27 zur Aufnahme der Kugeln 7, 7` durch Eindrücken der Blechabschnitte, welche die Aufnahmeschenkel 28, 29 des Kugelkäfigs 26 um die Durchbrechungen herum bilden, ausgeführt sind.

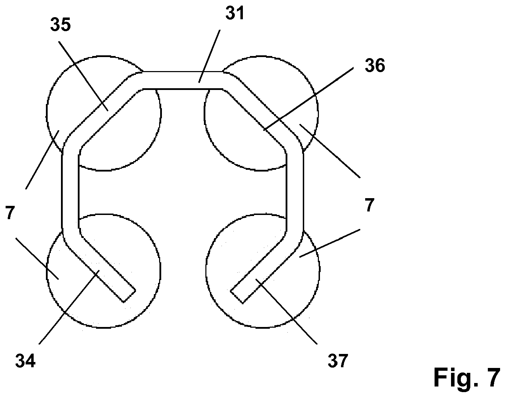

Während die Figuren 1 bis 5 jeweils Kugelkäfige mit genau zwei Aufnahmeschenkeln und einem dazwischen angeordneten Verbindungsabschnitt zeigen, sind in den Figuren 6 und 7 Kugelkäfige 30, 31 mit drei (Figur 6) beziehungsweise 4 (Figur 7) Aufnahmeschenkeln mit jeweils einem dazwischen angeordneten Verbindungsabschnitt dargestellt. In den gezeigten Ausführungsformen sind an jedem der Aufnahmeschenkel 31, 32, 33, 34, 35, 36, 37 sowohl Kugeln 7 aus Stahl als auch Kugeln 7' aus Graphit aufgenommen. Es sind jedoch Ausführungsformen denkbar, bei denen zumindest in einem der Aufnahmeschenkel ausschließlich Kugeln aus Graphit oder ausschließlich Kugeln aus Stahl aufgenommen sind.

### Bezugszeichen

- 1: Kugelkäfig
- 2: Aufnahmeschenkel
- 3: Aufnahmeschenkel
- 4: Verbindungsabschnitt
- 5: Innenraum
- 6: Durchbrechung
- 7: Kugel aus Stahl
- 7`: Kugel aus Graphit
- 8: Außenschiene
- 9: Innenschiene
- 10: Biegelinie
- 11: Achse
- 12: erster abgewinkelter Abschnitt des Aufnahmeschenkels
- 13: zweiter abgewinkelter Abschnitt des Aufnahmeschenkels
- 14: Teleskopschiene
- 20: Kugelkäfig
- 21: Aufnahmeschenkel
- 22: kreisförmige Durchbrechung
- 23: Kugelkäfig
- 24, 25: Aufnahmeschenkel
- 26: Kugelkäfig
- 27: Kalotten
- 28, 29: Aufnahmeschenkel
- 30, 31: Kugelkäfige
- 31-37: Aufnahmeschenkel

## Patentansprüche

1. Teleskopschiene (14) mit
einem ersten Schienenelement (8),
wenigstens einem weiteren Schienenelement (9) und
wenigstens einem Wälzkörperkäfig (1 , 20) zum Positionieren einer Mehrzahl von Wälzkörpern (7, 7`) zwischen zwei Schienenelementen (8, 9), wobei der Wälzkörperkäfig (1, 20) aufweist
mindestens zwei Aufnahmeschenkel (2, 3, 21) mit jeweils einer Mehrzahl von Durchbrechungen (6, 22),
wobei die Aufnahmeschenkel (2, 3, 21) zusammen einen einen Innenraum (5) teilweise einschließenden Querschnitt aufweisen,
einer Mehrzahl von in den Durchbrechungen (6, 22) der Aufnahmeschenkel (2, 3, 21) aufgenommenen Wälzkörpern (7, 7`),
wobei der Wälzkörperkäfig (1, 20) mit den Wälzkörpern (7, 7') zwischen dem ersten Schienenelement (8) und dem weiteren Schienenelement (9) angeordnet ist,
wobei die Teleskopschiene (14) eine erste Gruppe von Wälzkörpern (7') aufweist und die Wälzkörper (7') der ersten Gruppe aus Graphit hergestellt sind,
die Teleskopschiene (14) eine zweite Gruppe von Wälzkörpern (7) aufweist und die Wälzkörper (7) der zweiten Gruppe aus einem Material hergestellt sind, das eine größere Härte aufweist als das Graphit der Wälzkörper (7') der ersten Gruppe, und
in den Durchbrechungen (6, 22) mindestens zweier Aufnahmeeschenkel (2, 3, 21) jeweils mindestens zwei Wälzkörper (7) der zweiten Gruppe aufgenommen sind,
wobei die Wälzkörper der ersten Gruppe und die Wälzkörper der zweiten Gruppe in mindestens einer Schnittebene einen kreisförmigen Querschnitt mit einem Durchmesser aufweisen, wobei in den Durchbrechungen (6, 22) jedes von mindestens zwei Aufnahmeschenkeln (2, 3, 21) bereits bei der Montage alle Wälzkörper (7`) der ersten Gruppe einen kleineren Durchmesser aufweisen als mindestens zwei Wälzkörper (7) der zweiten Gruppe,
wobei in Längsrichtung betrachtet in jedem Aufnahmeschenkel (2, 3, 21) jeweils der erste und der letzte Wälzkörper, Wälzkörper der zweiten Gruppe sind,
**dadurch gekennzeichnet, dass**
jeder Wälzkörper der ersten Gruppe jeweils durch einen Abschnitt eines Aufnahmeschenkels (2, 3, 21) des Wälzkörperkäfigs von den Wälzkörpern der zweiten Gruppe getrennt ist.

2. Teleskopschiene (14) nach dem vorhergehenden Anspruch, **dadurch gekennzeichnet, dass** der Graphit der ersten Gruppe von Wälzkörpern eine Härte von 50 Shore oder mehr, vorzugsweise von 60 Shore oder mehr aufweist.

3. Teleskopschiene (14) nach einem der vorhergehenden Ansprüche, **dadurch gekennzeichnet, dass** der Graphit der ersten Gruppe von Wälzkörpern eine Druckfestigkeit von 90 MPa oder mehr, vorzugsweise von 100 MPa oder mehr aufweist.

4. Teleskopschiene (14) nach einem der vorhergehenden Ansprüche, **dadurch gekennzeichnet, dass** die Wälzkörper der ersten Gruppe in anderen Durchbrechungen (6, 22) der Aufnahmeschenkel (2, 3, 21) angeordnet sind als die Wälzkörper der zweiten Gruppe.

5. Teleskopschiene (14) nach einem der vorhergehenden Ansprüche, **dadurch gekennzeichnet, dass** in jedem der Aufnahmeschenkel (2, 3, 21) in Längsrichtung abwechselnd Wälzkörper der ersten Gruppe und Wälzkörper der zweiten Gruppe angeordnet sind.

6. Teleskopschiene (14) nach einem der vorhergehenden Ansprüche, **dadurch gekennzeichnet, dass** die Anzahl der Wälzkörper der zweiten Gruppe in mindestens zwei Aufnahmeschenkeln (2, 3, 21) mindestens doppelt so groß ist wie die Anzahl der Wälzkörper der ersten Gruppe.

7. Teleskopschiene (14) nach einem der vorhergehenden Ansprüche, **dadurch gekennzeichnet, dass** die Wälzkörper zumindest der ersten Gruppe oder der zweiten Gruppe Kugeln sind.

8. Teleskopschiene (14) nach einem der vorhergehenden Ansprüche, **dadurch gekennzeichnet, dass** alle Durchbrechungen (6, 22) in den Aufnahmeschenkeln (2, 3, 21) die gleiche geometrische Form aufweisen.

9. Teleskopschiene (14) nach einem der vorhergehenden Ansprüche, **dadurch gekennzeichnet, dass** mindestens eine der Durchbrechungen (6, 22) eines jeden Aufnahmeschenkels (2, 3, 21) in mindestens einer zu den Aufnahmeschenkeln (2, 3, 21) (4) senkrechten Schnittebene einen sich in Richtung des Innenraums (5) verjüngenden Querschnitt aufweist.

10. Teleskopschiene (14) nach dem vorhergehenden Anspruch, **dadurch gekennzeichnet, dass** die Durchbrechungen (6, 22) in der Schnittebene gerade, einander gegenüberliegende Seitenflächen aufweisen, wobei jeder der Aufnahmeschenkel (2, 3, 21) um eine zu der Schnittebene senkrechte Achse (11) gegeneinander abgewinkelte Abschnitte aufweist, wobei die Achse (11) die Durchbrechungen (6, 22) schneidet, so dass die Seitenflächen einen sich in Richtung des Innenraums (5) verringernden Abstand voneinander aufweisen.

11. Haushaltsgerät zur Lebensmittelzubereitung mit einer Teleskopschiene (14) nach einem der vorhergehenden Ansprüche.

12. Spülmaschine oder Klimakammer mit einer Teleskopschiene (14) nach einem der Ansprüche 1 bis 10.

## Claims

1. A telescopic rail (14) comprising
a first rail element (8),
at least one further rail element (9) and
at least one rolling body cage (1, 20) for positioning a plurality of rolling bodies (7, 7') between two rail elements (8, 9), wherein the rolling body cage (1, 20) has
at least two receiving limbs (2, 3, 21) having a respective plurality of through openings (6, 22),
wherein the receiving limbs (2, 3, 21) together have a cross-section partially enclosing an internal space (5),
a plurality of rolling bodies (7, 7') received in the through openings (6, 22) in the receiving limbs (2, 3, 21),
wherein the rolling body cage (1, 20) is arranged with the rolling bodies (7, 7') between the first rail element (8) and the further rail element (9),
wherein the telescopic rail (14) has a first group of rolling bodies (7') and the rolling bodies (7') of the first group are made of graphite,
the telescopic rail (14) has a second group of rolling bodies (7) and the rolling bodies (7) of the second group are made of a material which is of greater hardness than the graphite of the rolling bodies (7') of the first group, and
at least two rolling bodies (7) of the second group are respectively received in the through openings (6, 22) of at least two receiving limbs (2, 3, 21),
wherein the rolling bodies of the first group and the rolling bodies of the second group in at least one section plane are of a circular cross-section of a diameter, wherein in the through openings (6, 22) of each of at least two receiving limbs (2, 3, 21) all rolling bodies (7') of the first group are of a smaller diameter than at least two rolling bodies (7) of the second group,
considered in the longitudinal direction in each receiving limb (2, 3, 21) the first and the last rolling bodies are respectively rolling bodies of the second group, **characterised in that**
each rolling body of the first group is respectively separated from the rolling bodies of the second group by a portion of a receiving limb (2, 3, 21) of the rolling body cage .

2. The telescopic rail (14) according to the preceding claim **characterised in that** the graphite of the first group of rolling bodies is of a hardness of 50 Shore or more, preferably 60 Shore or more.

3. The telescopic rail (14) according to one of the preceding claims **characterised in that** the graphite of the first group of rolling bodies has a compression strength of 90 MPa or more, preferably 100 MPa or more.

4. The telescopic rail (14) according to one of the preceding claims **characterised in that** the rolling bodies of the first group are arranged in other through openings (6, 22) of the receiving limbs (2, 3, 21) from the rolling bodies of the second group.

5. The telescopic rail (14) according to one of the preceding claims **characterised in that** arranged in each of the receiving limbs (2, 3, 21) alternately in the longitudinal direction are rolling bodies of the first group and rolling bodies of the second group.

6. The telescopic rail (14) according to one of the preceding claims **characterised in that** the number of rolling bodies of the second group in at least two receiving limbs (2, 3, 21) is at least twice as great as the number of rolling bodies of the first group.

7. The telescopic rail (14) according to one of the preceding claims **characterised in that** the rolling bodies at least of the first group or the second group are balls.

8. The telescopic rail (14) according to one of the preceding claims **characterised in that** all through openings (6, 22) in the receiving limbs (2, 3, 21) are of the same geometrical shape.

9. The telescopic rail (14) according to one of the preceding claims **characterised in that** at least one of the through openings (6, 22) of each receiving limb (2, 3, 21) in at least one section plane perpendicular to the receiving limbs (2, 3, 21) is of a cross-section narrowing in the direction of the internal space (5).

10. The telescopic rail (14) according to the preceding claim **characterised in that** the through openings (6, 22) in the section plane have straight mutually oppositely disposed side surfaces, wherein each of the receiving limbs (2, 3, 21) has portions which are angled with respect to each other about an axis (11) perpendicular to the section plane, wherein the axis (11) intersects the through openings (6, 22) so that the side surfaces are at a spacing from each other, that decreases in the direction of the internal space (5).

11. A domestic appliance for foodstuff preparation comprising a telescopic rail (14) according to one of the preceding claims.

12. A dishwasher or climatic chamber comprising a telescopic rail (14) according to one of claims 1 to 10.

## Revendications

1. Rail télescopique (14) comprenant
un premier élément de rail (8),
au moins un élément de rail (9) supplémentaire, et
au moins une cage pour organes de roulement (1, 20) permettant de positionner une pluralité d'organes de roulement (7, 7') entre deux éléments de rail (8, 9), où la cage pour organes de roulement (1, 20) présente
au moins deux branches de réception (2, 3, 21) comprenant respectivement une pluralité de percements (6, 22),
où les branches de réception (2, 3, 21) présentent en commun une section transversale incluant partiellement un espace intérieur (5),
une pluralité d'organes de roulement (7, 7') accueillis dans les percements (6, 22) des branches de réception (2, 3, 21),
où la cage pour organes de roulement (1, 20) comprenant les organes de roulement (7, 7') est agencée entre le premier élément de rail (8) et l'élément de rail (9) supplémentaire,
où le rail télescopique (14) présente un premier groupe d'organes de roulement (7') et les organes de roulement (7') du premier groupe sont fabriqués en graphite,
le rail télescopique (14) présente un second groupe d'organes de roulement (7) et les organes de roulement (7) du second groupe sont fabriqués dans un matériau présentant une dureté supérieure à celle du graphite des organes de roulement (7') du premier groupe, et
respectivement au moins deux organes de roulement (7) du second groupe sont accueillis dans les percements (6, 22) d'au moins deux branches de réception (2, 3, 21),
où les organes de roulement du premier groupe et les organes de roulement du second groupe présentent une section transversale circulaire d'un certain diamètre dans au moins un plan de coupe, où, au sein des percements (6, 22) de chacune d'au moins deux branches de réception (2, 3, 21), tous les organes de roulement (7') du premier groupe présentent dès le montage un diamètre inférieur à celui d'au moins deux organes de roulement (7) du second groupe,
où, considéré dans le sens longitudinal au sein de chaque branche de réception (2, 3, 21), respectivement le premier organe de roulement et le dernier organe de roulement sont des organes de roulement du second groupe,
**caractérisé en ce que**
chaque organe de roulement du premier groupe est séparé des organes de roulement du second groupe respectivement par une section d'une branche de réception (2, 3, 21) de la cage pour organes de roulement.

2. Rail télescopique (14) selon la revendication précédente, **caractérisé en ce que** le graphite du premier groupe d'organes de roulement présente une dureté supérieure ou égale à 50 Shore, de manière préférée supérieure ou égale à 60 Shore.

3. Rail télescopique (14) selon l'une des revendications précédentes, **caractérisé en ce que** le graphite du premier groupe d'organes de roulement présente une résistance à la compression supérieure ou égale à 90 MPa, de manière préférée supérieure ou égale à 100 MPa.

4. Rail télescopique (14) selon l'une des revendications précédentes, **caractérisé en ce que** les organes de roulement du premier groupe sont agencés dans des percements (6, 22) des branches de réception (2, 3, 21) différents de ceux dans lesquels sont agencés les organes de roulement du second groupe.

5. Rail télescopique (14) selon l'une des revendications précédentes, **caractérisé en ce que** des organes de roulement du premier groupe et des organes de roulement du second groupe sont agencés en alternance dans le sens longitudinal dans chacune des branches de réception (2, 3, 21).

6. Rail télescopique (14) selon l'une des revendications précédentes, **caractérisé en ce que** le nombre d'organes de roulement du second groupe dans au moins deux branches de réception (2, 3, 21) est au moins deux fois plus grand que le nombre d'organes de roulement du premier groupe.

7. Rail télescopique (14) selon l'une quelconque des revendications précédentes, **caractérisé en ce que** les organes de roulement d'au moins le premier groupe ou le second groupe sont des billes.

8. Rail télescopique (14) selon l'une des revendications précédentes, **caractérisé en ce que** tous les percements (6, 22) au sein des branches de réception (2, 3, 21) présentent la même forme géométrique.

9. Rail télescopique (14) selon l'une des revendications précédentes, **caractérisé en ce qu'**au moins un des percements (6, 22) de chaque branche de réception (2, 3, 21) présente une section transversale qui se rétrécit en direction de l'espace intérieur (5) dans au moins un plan de coupe perpendiculaire aux branches de réception (2, 3, 21) (4).

10. Rail télescopique (14) selon la revendication précédente, **caractérisé en ce que** les percements (6, 22) dans le plan de coupe présentent des surfaces latérales droites et opposées, chacune des branches de réception (2, 3, 21) présentant des sections coudées les unes par rapport aux autres autour d'un axe (11) perpendiculaire au plan de coupe, l'axe (11) coupant les percements (6, 22) de façon telle que les surfaces latérales présentent un écart entre elles qui diminue en direction de l'espace intérieur (5).

11. Appareil électroménager de préparation culinaire muni d'un rail télescopique (14) selon l'une des revendications précédentes.

12. Lave-vaisselle ou enceinte climatique muni(e) d'un rail télescopique (14) selon l'une des revendications 1 à 10.
